# EUROPEAN PATENT APPLICATION

(11) **EP 4 733 148 A1**
(43) Date of publication of application: **29.04.2026**
(21) Application number: 25201225.7
(22) Date of filing: 09.09.2025
(51) Int. Cl.: B60R 19/48

(54) **SENSOR SUPPORT MEMBER**

(30) Priority: 25.10.2024 JP 2024187990
(71) Applicant: Suzuki Motor Corporation, Shizuoka 432-8611 (JP)
(72) Inventor: KAWAHARA, Shunya, Hamamatsu-shi, 432-8611 (JP); ARIMITSU, Kaishi, Hamamatsu-shi, 432-8611 (JP)
(74) Representative: Haseltine Lake Kempner LLP

(57) **Abstract**

[Problem to be Solved] To reduce displacement of a sensor device even when the sensor device is supported at a location away from a body structure member.

[Solution] A sensor support member 10 includes a base portion 1 disposed on the vehicle outer side of a body structure member of a vehicle and extending in the up-down direction, and a sensor support portion 2 disposed on one side in the up-down direction and on the vehicle outer side of the base portion 1, and supporting a sensor device. The sensor support portion 2 includes a sensor fixing portion 21A disposed on another side in the up-down direction in the sensor support portion 2 and to which the sensor device is fixed. The base portion 1 includes a body fixing portion 11A disposed on the other side in the base portion 1 and fixed to the body structure member, and an up-down direction connection portion 12A extending in the up-down direction to the other side so as to be continuous with the sensor support portion 2. The up-down direction connection portion 12A is connected to the sensor fixing portion 21A and bulges toward the vehicle outer side.

## Description

### [Technical Field]

The present invention relates to sensor support members for supporting a sensor device that senses the external environment of a vehicle.

### [Background Art]

A sensor device that senses the external environment of a vehicle is provided at front and rear portions of a vehicle such as an automobile. Examples of the sensor device include a millimeter wave radar using millimeter wave electromagnetic waves as detection waves, an acoustic sensor (ultrasonic sensor/sonar) using sound waves as detection waves, and a camera (imaging device). The sensor device is disposed at the back surface side of an exterior panel such as a bumper, a grille, or an emblem forming an exterior design surface of the vehicle.

A structure disclosed in Patent Literature 1 is known as an example of a conventional vehicle structure having a structure for disposing a sensor device at the back surface side of an exterior panel. The structure disclosed in Patent Literature 1 includes a first absorption mechanism that holds a sensor bracket holding the sensor device to be retractable along the front-rear direction, and a second absorption mechanism that swingably holds the sensor bracket. The sensor bracket is suspended from an upper beam which is a body structure member and is fixed to the back side of an emblem via the first absorption mechanism and the second absorption mechanism.

### [Citation List]

### [Patent Literature]

[Patent Literature 1] JP 2021-148607 A

### [Summary of Invention]

### [Problems to be Solved by the Invention]

To maintain a desired sensing accuracy of the sensor device, the sensor device should be maintained at an intended location with respect to the body structure member. In Patent Literature 1, the sensor device is supported at a location away from the body structure member via the sensor bracket. In such a case, the farther away the sensor device is from the body structure member, the longer the portion of the sensor bracket between the sensor device and the body structure member becomes, and the sensor device tends to become more susceptible to displacement, such as swinging in the front-rear direction. Moreover, the rigidity of the exterior panel is often less than the rigidity of the body structure member. Therefore, even when the sensor bracket is coupled to the exterior panel, there is a possibility that the sensor device will be displaced from the intended location due to oscillation or a minor collision during travel. Accordingly, the structure of Patent Literature 1 has room for improvement in reducing displacement of the sensor location.

In view of the foregoing, the present invention aims to provide a sensor support member that can reduce displacement of a sensor device even when the sensor device is supported at a location away from a body structure member.

### [Means for Solving the Problems]

One aspect of the present invention is a sensor support member including a base portion disposed on a vehicle outer side of a body structure member of a vehicle and extending in an up-down direction, and a sensor support portion disposed on one side in the up-down direction and on the vehicle outer side of the base portion, and supporting a sensor device that senses an external environment of the vehicle. In the sensor support member, the sensor support portion includes a sensor fixing portion disposed on another side in the up-down direction in the sensor support portion and to which the sensor device is fixed; and the base portion includes a body fixing portion disposed on the other side in the base portion and fixed to the body structure member, and an up-down direction connection portion extending in the up-down direction toward the other side so as to be continuous with the sensor support portion. The up-down direction connection portion is connected to the sensor fixing portion and bulges toward the vehicle outer side.

### [Advantageous Effect of Invention]

The one aspect of the present invention can provide a sensor support member that can reduce displacement of a sensor device even when the sensor device is supported at a location away from a body structure member.

### [Brief Description of Drawings]

[Figure 1] Figure 1 is an exploded perspective view of a front portion of a vehicle to which a sensor support portion according to an embodiment of the present invention is applied.
[Figure 2] Figure 2 is a front view of a sensor support member as viewed from the vehicle front.
[Figure 3] Figure 3 is a partial perspective view of the sensor support member as viewed from the vehicle front.
[Figure 4] Figure 4 is a partial perspective view of the sensor support member as viewed from the vehicle rear.
[Figure 5] Figure 5 is a partial rear view of the sensor support member and an in-vehicle part coupled thereto as viewed from the vehicle rear.
[Figure 6] Figure 6 is a partial rear view of the sensor support member as viewed from the vehicle rear.

### [Mode for Carrying Out the Invention]

Hereinafter, an embodiment of the present invention will be described in detail with reference to the drawings. **In** the drawings, an arrow Fr direction indicates the vehicle front in the front-rear direction of the vehicle. An arrow L direction indicates the left in the vehicle width direction when viewed from the rear toward the front of the vehicle, and an arrow R direction indicates the right in the vehicle width direction when viewed from the rear toward the front of the vehicle. An arrow U direction indicates the upper direction of the vehicle in the up-down direction of the vehicle. In the following description, "front" and "rear" correspond to the front and rear in the front-rear direction of the vehicle, and "up" and "down" correspond to up and down in the up-down direction of the vehicle. "Left" and "right" correspond to the left and right in the vehicle width direction when viewed from the vehicle rear side toward the vehicle front side.

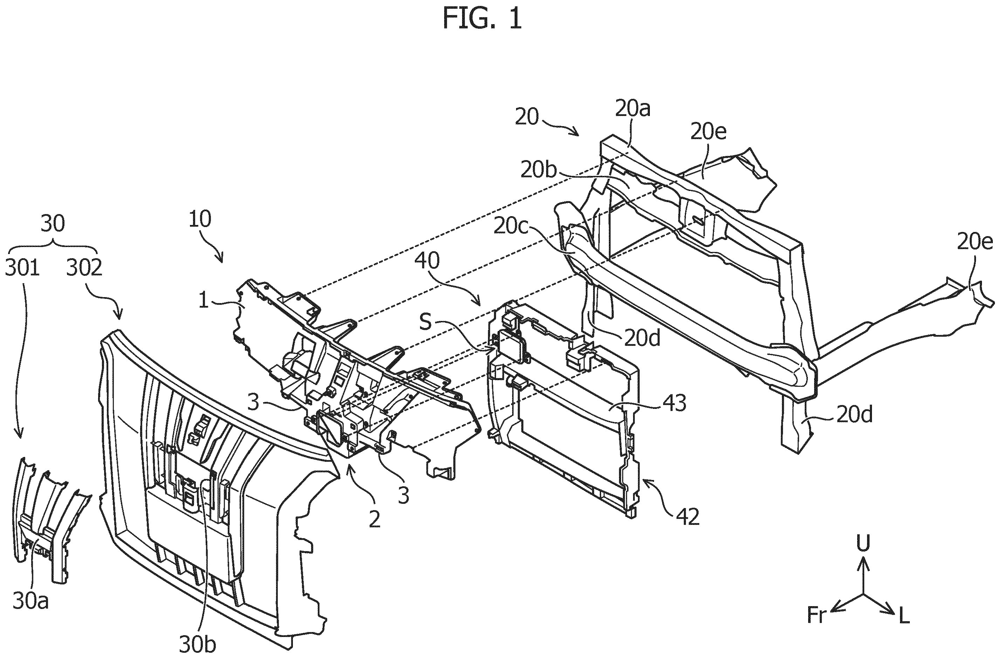

As illustrated in Figure 1, a sensor support member 10 according to the present embodiment is a member disposed at a front portion of a vehicle to support a sensor device S sensing the external environment of the vehicle to a predetermined location with respect to a body structure member 20. The body structure member 20 is a highly rigid member using a steel plate or the like and forming the vehicle structure. The sensor support member 10 is fixed to the body structure member 20 and is supported by the body structure member 20 from the vehicle rear side (vehicle inner side).

The body structure member 20 includes first, second, and third cross members 20a, 20b, 20c, left and right column members 20d, left and right side members 20e, and other parts. In the illustrated example, the first, second, and third cross members 20a, 20b, 20c extend in the vehicle width direction, and are spaced apart from each other in the up-down direction. The second cross member 20b is disposed below the first cross member 20a, and the third cross member 20c is disposed below the second cross member 20b. Both vehicle widthwise end portions of each cross member 20a, 20b, 20c are joined to the left and right column members 20d extending in the up-down direction. The left and right side members 20e are joined to the left and right column members 20d, respectively, and extend toward the vehicle rear side.

In the illustrated example, the sensor support member 10 is disposed adjacent to the vehicle rear side (vehicle inner side) of an exterior panel 30 forming a design surface on the outer side of the vehicle in a front portion of the vehicle, and is coupled to the exterior panel 30. The exterior panel 30 is a front grille, a front bumper, or the like, for example. The exterior panel 30 includes a detection wave passage portion 30a that allows passage of detection waves transmitted and received by the sensor device S in a region facing the sensor device S in the front-rear direction of the vehicle. As illustrated, the exterior panel 30 may include a first exterior panel 301 and a second exterior panel 302 overlapping one another in the front-rear direction of the vehicle, and in this case, the detection wave passage portion 30a is provided in the first exterior panel 301 on the vehicle front side (vehicle outer side).

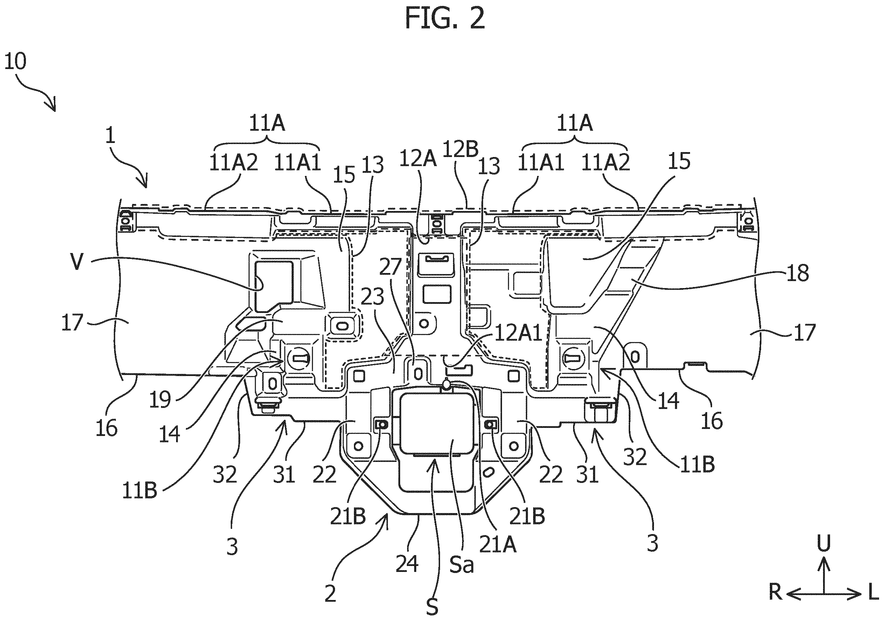

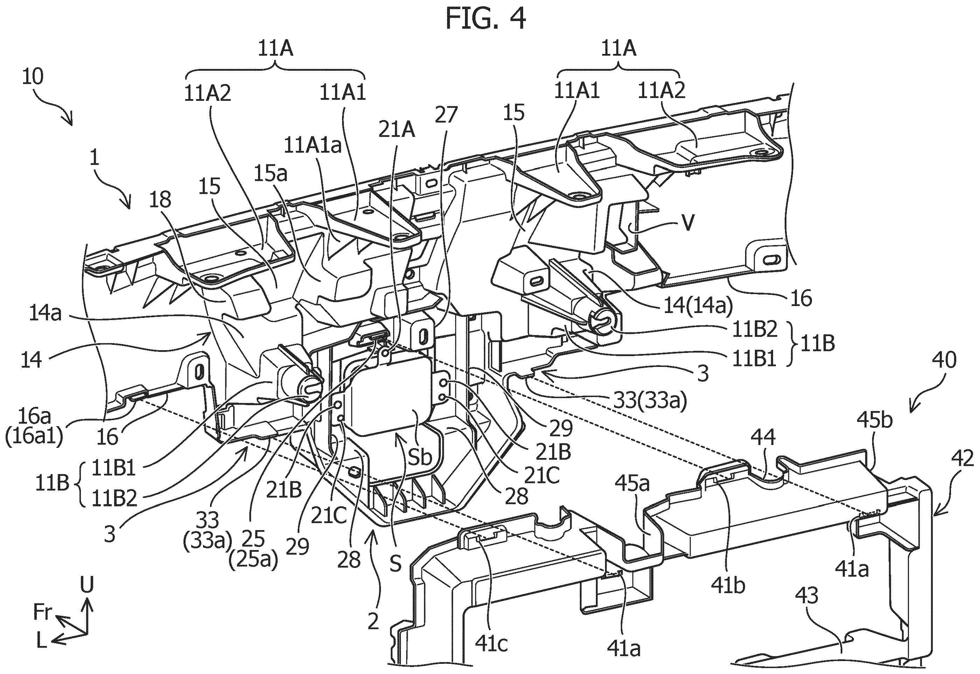

The sensor device S includes a sensor main body Sa (see Figures 2 and 4) that transmits and receives detection waves, and a sensor bracket Sb that supports the sensor main body Sa. The sensor bracket Sb includes flanges fixed to sensor fixing portions 21A, 21B described later (see Figure 4). By fixing the flanges to the sensor fixing portions 21A, 21B, the sensor device S is supported by the sensor support member 10 such that the sensor main body Sa faces the detection wave passage portion 30a in the front-rear direction of the vehicle.

For example, the sensor main body Sa is a millimeter wave radar using millimeter wave electromagnetic waves as detection waves, and the detection wave passage portion 30a is formed of a material with properties that allow passage of detection waves therethrough, such as a synthetic resin or the like. The electromagnetic waves as detection waves may be microwaves. The sensor main body Sa may be an acoustic sensor (ultrasonic sensor/sonar) using sound waves as detection waves, or a camera (imaging device) using electromagnetic waves in the visible light band or infrared band as detection waves, or the like. **In** this case, the detection wave passage portion 30a may include a through hole (opening). The detection waves may be sunlight or may be transmitted from a detection wave transmission device provided separately from the sensor device S, and in this case, the sensor main body Sa may not emit detection waves.

As illustrated in Figures 1 and 2, the sensor support member 10 includes a base portion 1 fixed to the body structure member 20, and a sensor support portion 2 supporting the sensor device S. The sensor support member 10 is a resin injection molded part, for example, and the base portion 1 and the sensor support portion 2 are formed as one body.

The base portion 1 extends in the up-down direction and the width direction, and is generally disposed so as to face the vehicle front (vehicle outer side). The width direction is a direction orthogonal to the up-down and front-rear directions of the vehicle, and coincides with the vehicle width direction in the present embodiment. In the illustrated example, the base portion 1 has a generally rectangular shape elongated in the width direction in plan view as viewed from one side in the front-rear direction of the vehicle. Note that in the present embodiment, the front-rear direction of the vehicle corresponds to "inside-outside direction of the vehicle" according to the present embodiment. The inside-outside direction of the vehicle is a direction connecting the vehicle inner side and the vehicle outer side of the sensor support member 10, and, in other words, is a normal direction of a sensor surface of the sensor main body Sa oriented toward the outside of the vehicle and facing the detection wave passage portion 30a.

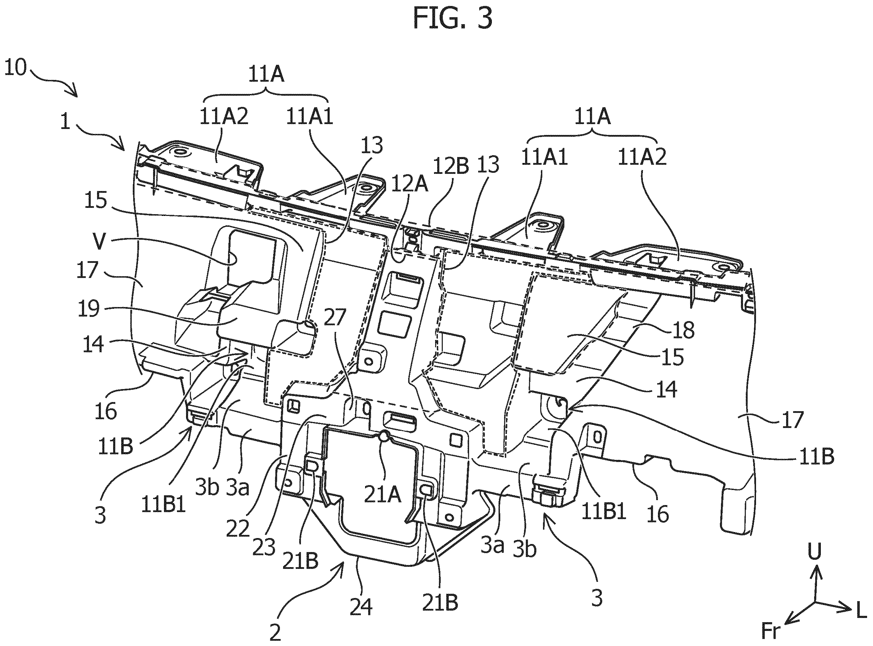

As illustrated in Figures 2 and 3, the base portion 1 includes a first body fixing portion 11A and a second body fixing portion 11B that are fixed to the body structure member 20. The first body fixing portion 11A is disposed on the upper side in the base portion 1, and is fixed to the first cross member 20a of the body structure member 20 using a coupling member such as a bolt or a clip. The second body fixing portion 11B is disposed outside the sensor support portion 2 in the width direction, and is fixed to the second cross member 20b of the body structure member 20 using a coupling member. In the present embodiment, the first body fixing portion 11A corresponds to "body fixing portion" according to the present invention, and the second body fixing portion 11B corresponds to "another body fixing portion" according to the present invention.

In the illustrated example, the first body fixing portion 11A protruding toward the vehicle rear side (vehicle inner side) from a width direction connection portion 12B described later is provided in an upper edge portion of the base portion 1. The first body fixing portion 11A includes a bottom wall protruding toward the vehicle rear side and oriented toward the upper side, and a peripheral wall protruding upward from the peripheral edge of the bottom wall and extending along the peripheral edge. An insertion hole into which the coupling member such as a bolt is inserted is formed in the bottom wall. The second body fixing portion 11B will be described in detail later.

The sensor support portion 2 is disposed on the lower side and on the vehicle front side (vehicle outer side) of the base portion 1. Specifically, the sensor support portion 2 projects downward from a widthwise central portion of the lower edge of the base portion 1 and bulges toward the vehicle front side from the base portion 1. More specifically, the sensor support portion 2 includes a front wall extending in the up-down and width directions and oriented toward the vehicle front, and an outer peripheral wall protruding toward the vehicle rear side from an outer peripheral edge of the front wall. An upper portion of the front wall is connected to the base portion 1 (specifically, to neighboring portion 13 described later) in the front-rear direction of the vehicle by the outer peripheral wall, whereby the front wall is disposed in a location offset to the vehicle front side from the base portion 1 (specifically, from neighboring portion 13).

The sensor support portion 2 has a shape corresponding to the outer shape of the sensor main body Sa, and has a frame shape (annular shape) surrounding the sensor main body Sa. The sensor support portion 2 includes an upper sensor fixing portion 21A and an outer sensor fixing portion 21B, to which the sensor device S is fixed. The upper sensor fixing portion 21A is disposed on the upper side (i.e., base portion 1 side of sensor support portion 2) in the sensor support portion 2, and is disposed above the sensor main body Sa. The outer sensor fixing portion 21B is provided in a widthwise lateral portion 22 of the sensor support portion 2, and is disposed on the widthwise outer side (left side or right side) of the sensor main body Sa. The flanges of the sensor bracket Sb of the sensor device S are fixed to the sensor fixing portions 21A, 21B using coupling members such as bolts, for example.

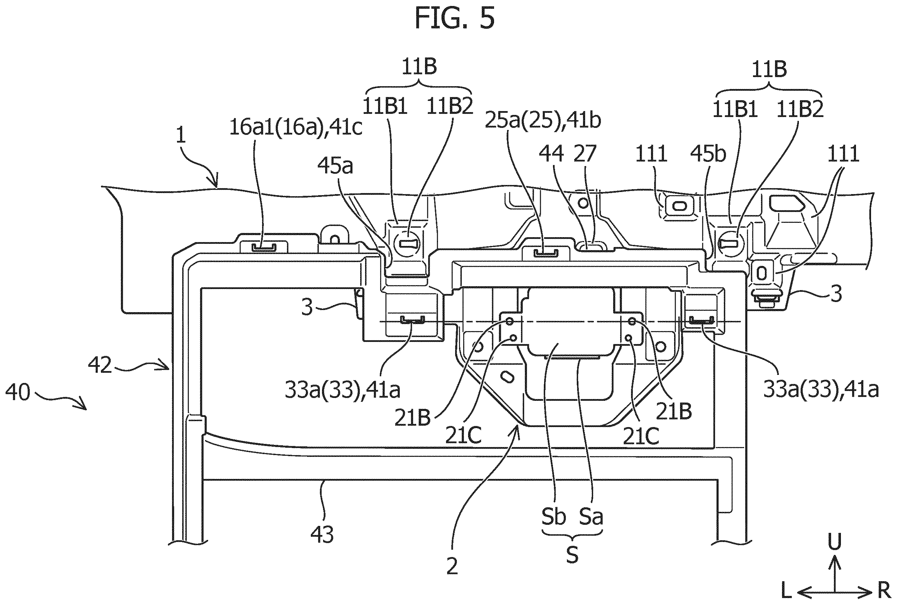

Specifically, the sensor support portion 2 includes a left and right pair of lateral portions 22 spaced apart from each other in the width direction, and an upper portion 23 and a lower portion 24 spaced apart from each other in the up-down direction. Each lateral portion 22 extends in the up-down direction. The upper portion 23 connects upper end portions of the pair of lateral portions 22 in the width direction, and the lower portion 24 connects lower end portions of the pair of lateral portions 22 in the width direction. In the illustrated example, the sensor main body Sa has a rectangular outer shape in plan view as viewed from the vehicle front. The upper portion 23 extends generally straight in the width direction. The lower portion 24 has a shape protruding downward so as to form a space for the camera (not illustrated) below the sensor main body Sa. The upper sensor fixing portion 21A is provided in the upper portion 23. The outer sensor fixing portion 21B is provided on each of the left and right lateral portions 22. A sensor positioning portion 21C (positioning projection protruding toward the vehicle rear side in the illustrated example) by which the sensor device S is positioned is provided below each outer sensor fixing portion 21B (see Figures 4 and 5). Note that the shape of the sensor support portion 2 is not limited to the above shape, and may be another shape such as a circle, an inverted U shape omitting the lower portion 24, or the like.

Note that in the present embodiment, the lower side corresponds to "one side in the up-down direction", the upper side corresponds to the "other side in the up-down direction", and the vehicle front side corresponds to the "vehicle outer side" according to the present invention. Additionally, in the present embodiment, the upper side in the sensor support portion 2 corresponds to the "other side in the up-down direction in the sensor support portion" according to the present invention. Note that "other side in the up-down direction in the sensor support portion" can also be referred to as the base portion side in the sensor support portion. Moreover, in the present embodiment, the upper sensor fixing portion 21A corresponds to "sensor fixing portion" according to the present invention, and the outer sensor fixing portion 21B corresponds to "another sensor fixing portion" according to the present invention.

As illustrated in Figures 2 to 4, in the present embodiment, the base portion 1 includes an up-down direction connection portion 12A. Moreover, as will be described in detail later, the base portion 1 further includes the width direction connection portion 12B, the neighboring portion 13, a depressed portion 14, a bulging portion 15, and other portions.

The up-down direction connection portion 12A is continuous with the sensor support portion 2 and extends upward in the up-down direction. Specifically, in the illustrated example, the upper sensor fixing portion 21A is disposed at the middle in the width direction of the upper portion 23 of the sensor support portion 2. The up-down direction connection portion 12A extends upward from a widthwise central portion of the upper portion 23 of the sensor support portion 2, the widthwise central portion including the upper sensor fixing portion 21A. The lower end of the up-down direction connection portion 12A is connected to the upper sensor fixing portion 21A. Note that in the present embodiment, the upper side corresponds to "another side in the up-down direction" according to the present invention.

**In** addition, the up-down direction connection portion 12A bulges toward the vehicle front side (vehicle outer side) and has a protruding shape protruding toward the vehicle front side. Specifically, the up-down direction connection portion 12A includes a front wall generally oriented toward the vehicle front and extending in the up-down direction, and a pair of side walls protruding toward the vehicle rear side from both widthwise outer edges of the front wall and extending in the up-down direction along the outer edges. The front wall is continuous with the front wall of the sensor support portion 2, and the rear end of each side wall is connected to the neighboring portion 13. The neighboring portion 13 is a part of the base portion 1 adjacent to the widthwise outer side of the up-down direction connection portion 12A, and extends in the up-down direction along the up-down direction connection portion 12A so as to connect the sensor support portion 2 and the width direction connection portion 12B in the up-down direction. As a result, the front wall of the up-down direction connection portion 12A is disposed in a location offset to the vehicle front side from the neighboring portion 13.

According to the sensor support member 10 with the above configuration, the upper sensor fixing portion 21A is disposed in a location away from the first body fixing portion 11A, and the sensor device S is supported at a location away from the body structure member 20 via the sensor support member 10. By providing the up-down direction connection portion 12A extending from the upper sensor fixing portion 21A toward the upper side on which the first body fixing portion 11A is disposed, the support rigidity of the body structure member 20 for the upper sensor fixing portion 21A is improved, whereby the support rigidity, particularly the support rigidity in the up-down direction, for the sensor device S is improved. Accordingly, even when the sensor support portion 2 is supported at a location away from the body structure member 20, it is possible to reduce displacement of the sensor device S due to an external load, vibration, or the like acting on the sensor support member 10. As a result, it is possible to maintain the sensing accuracy of the sensor device S. In particular, the up-down direction connection portion 12A bulges toward the vehicle front side (vehicle outer side) and has a protruding shape protruding toward the vehicle front side. As a result, the rigidity of the up-down direction connection portion 12A is improved, and the support rigidity for the sensor device S is improved even more. Accordingly, displacement of the sensor device S can be reduced even more reliably.

In the illustrated example, the lower portion 24 of the sensor support portion 2 is offset to the vehicle rear side (vehicle inner side) from other portions (22, 23) of the sensor support portion 2, and a step in the front-rear direction of the vehicle is formed between the lower portion 24 and each lateral portion 22. The sensor support portion 2 includes a connection wall 28 connecting the lower portion 24 and each lateral portion 22 in the front-rear direction of the vehicle, and a reinforcement rib 29 extending upward from the connection wall 28 (see Figure 4). The reinforcement rib 29 protrudes toward the vehicle rear side from a rear surface of the lateral portion 22. According to such a configuration, the rigidity in the front-rear and up-down directions of the vehicle around the outer sensor fixing portion 21B, i.e., the torsional rigidity is improved.

In the present embodiment, a lower end portion 12A1 of the up-down direction connection portion 12A extends in the width direction so as to overlap the lateral portion 22 in the width direction. According to such a configuration, the rigidity of the outer sensor fixing portion 21B and its periphery is improved, whereby the support rigidity for the sensor device S is improved even more.

In the illustrated example, a lower portion of the up-down direction connection portion 12A is trapezoidal in plan view as viewed from one side in the front-rear direction of the vehicle, and increases in width toward the lower side. Of the lower portion, the lower end portion 12A1 extends outward beyond the widthwise inner end of the lateral portion 22 in the width direction, and in the illustrated example, extends to substantially the same location as the outer sensor fixing portion 21B in the width direction. The lower end portion 12A1 may extend further to a location outward of the outer sensor fixing portion 21B in the width direction.

In the present embodiment, the first body fixing portion 11A is provided on each outer side (left side and right side) of the up-down direction connection portion 12A in the width direction. The base portion 1 includes the width direction connection portion 12B that connects the up-down direction connection portion 12A and the first body fixing portions 11A on each outer side (left side and right side). In the illustrated example, the width direction connection portion 12B extends upward from the upper end of the up-down direction connection portion 12A to the upper edge of the base portion 1, and then extends toward both outer sides (right side and left side) in the width direction along the upper edge.
Accordingly, the width direction connection portion 12B forms an upper edge portion of the base portion 1. The width direction connection portion 12B is connected to the front end of the first body fixing portion 11A.

According to such a configuration, the up-down direction connection portion 12A is connected to the first body fixing portions 11A on both sides via the width direction connection portion 12B, so that the support rigidity of the body structure member 20 for the upper sensor fixing portion 21A is improved even more. As a result, the support rigidity for the sensor device S is improved even more, and displacement of the sensor device S can be reduced even more reliably.

In the present embodiment, the first body fixing portion 11A includes an inner body fixing portion 11A1 and an outer body fixing portion 11A2 arranged in the width direction. The inner body fixing portion 11A1 is disposed between the up-down direction connection portion 12A and the outer body fixing portion 11A2 in the width direction. Each of the inner body fixing portion 11A1 and the outer body fixing portion 11A2 is fixed to the first cross member 20a using the coupling member. The width direction connection portion 12B extends in the width direction and connects the up-down direction connection portion 12A and both of the inner body fixing portion 11A1 and outer body fixing portion 11A2. Specifically, the width direction connection portion 12B extends to a location overlapping at least a part of the outer body fixing portion 11A2 in the width direction, and in the illustrated example, extends to a location overlapping the entire outer body fixing portion 11A2 in the width direction.

According to such a configuration, since the up-down direction connection portion 12A is connected to the first cross member 20a via both the inner body fixing portion 11A1 and the outer body fixing portion 11A2 on each side in the width direction, the support rigidity of the body structure member 20 for the upper sensor fixing portion 21A is improved even more. As a result, the support rigidity for the sensor device S is improved even more, and displacement of the sensor device S can be reduced even more reliably.

A vent hole V penetrating the base portion 1 in the front-rear direction of the vehicle is formed below the right first body fixing portion 11A. The vent hole V is located between the inner body fixing portion 11A1 and the outer body fixing portion 11A2 in the vehicle width direction. As a result, the rigidity around the vent hole V is improved and deformation around the vent hole is reduced. Furthermore, a raised portion 19 raised toward the vent hole V is provided adjacent to the vent hole V, so that deformation around the vent hole V is reduced more reliably.

In the present embodiment, the second body fixing portion 11B is disposed between the inner body fixing portion 11A1 and the outer body fixing portion 11A2 in the width direction. According to such a configuration, since the second body fixing portion 11B is provided in addition to the first body fixing portion 11A, the support rigidity of the body structure member 20 for the sensor support member 10 is improved, whereby the support rigidity for the sensor device S is improved even more. Moreover, the support rigidity, particularly the support rigidity in the width direction, of the body structure member 20 for the sensor support member 10 is improved even more, whereby the support rigidity for the sensor device S is improved particularly in the width direction. As a result, displacement of the sensor device S can be reduced even more reliably particularly in the width direction.

In the present embodiment, the base portion 1 includes the neighboring portion 13 as described earlier, and further includes the bulging portion 15 adjacent to the widthwise outer side of the neighboring portion 13 and bulging toward the vehicle front side (vehicle outer side) from the neighboring portion 13. The bulging portion 15 connects the neighboring portion 13 and the outer body fixing portion 11A2. In other words, a part of the bulging portion 15 is connected to the neighboring portion 13, and another part of the bulging portion 15 is connected to the outer body fixing portion 11A2. In the illustrated example, in plan view as viewed from the vehicle front, the bulging portion 15 is generally trapezoidal increasing in width toward the upper side. An upper edge portion of the bulging portion 15 is connected to the outer body fixing portion 11A2, and a widthwise inner edge portion of the bulging portion 15 is connected to the neighboring portion 13.

According to such a configuration, the sensor support portion 2 is connected to the outer body fixing portion 11A2 via the neighboring portion 13 and the bulging portion 15, and is supported by the body structure member 20 via the outer body fixing portion 11A2 located on the widthwise outer side of the second body fixing portion 11B. As a result, the support rigidity for the sensor device S is improved even more, and displacement of the sensor device S can be reduced even more reliably. In particular, since the bulging portion 15 formed in a protruding shape bulging toward the vehicle front side improves the rigidity of the bulging portion 15, the support rigidity for the sensor device S is improved effectively.

As illustrated in the drawings, the bulging portion 15 preferably extends in the width direction so as to straddle the inner body fixing portion 11A1 and the outer body fixing portion 11A2 in the width direction. Specifically, a widthwise inner portion of the upper edge portion of the bulging portion 15 overlaps the inner body fixing portion 11A1 in the width direction, and a widthwise outer portion of the upper edge portion of the bulging portion 15 overlaps the outer body fixing portion 11A2 in the width direction. According to such a configuration, the support rigidity of the body structure member 20 for the sensor device S via the first body fixing portion 11A is improved even more, and displacement of the sensor device S can be reduced even more reliably.

The left depressed portion 14 is connected to the left inner body fixing portion 11A1 via a side wall 15a of the bulging portion 15 and a rib 11A1a supporting the inner body fixing portion 11A1 from below (see Figure 4). According to such a configuration, the rigidity of each of the left second body fixing portion 11B and the left inner body fixing portion 11A1 is improved even more.

In the present embodiment, the sensor support member 10 further includes an outer connection portion 3. The outer connection portion 3 is formed integrally with the base portion 1 and the sensor support portion 2. The outer connection portion 3 extends outward in the width direction from the lateral portion 22 and connects the lateral portion 22 and the second body fixing portion 11B. Specifically, the second body fixing portion 11B is disposed on the lower side (lower end portion) in the base portion 1. In the illustrated example, the second body fixing portion 11B is provided on each outer side in the width direction (left side and right side) of the sensor support portion 2. The outer connection portion 3 extends in the width direction along the lower edge of the base portion 1, and is disposed adjacent to the lower side of the second body fixing portion 11B. The widthwise inner side of the outer connection portion 3 is connected to the lateral portion 22, and the upper side of the outer connection portion 3 is connected to the second body fixing portion 11B. In the present embodiment, the outer connection portion 3 is provided on each side in the width direction (left side and right side) of the sensor support portion 2. The left outer connection portion 3 extends leftward from the left lateral portion 22, and the right outer connection portion 3 extends rightward from the right lateral portion 22.

According to such a configuration, since the lateral portion 22 in which the outer sensor fixing portion 21B is provided is connected to the second body fixing portion 11B by the outer connection portion 3, the rigidity, particularly the widthwise rigidity, of the outer sensor fixing portion 21B and its periphery is improved, which improves the support rigidity for the sensor device S. As a result, displacement of the sensor device S can be reduced even more.

As illustrated in Figures 3 and 4, in the present embodiment, the second body fixing portion 11B has a recessed shape recessed toward the vehicle rear side (vehicle inner side), and the outer connection portion 3 is continuous with the second body fixing portion 11B in the front-rear direction of the vehicle (inside-outside direction of vehicle).

Specifically, the recessed second body fixing portion 11B includes a tubular peripheral wall 11B1 extending in the front-rear direction of the vehicle, and a bottom wall 11B2 provided at the rear end of the peripheral wall 11B1. In the illustrated example, the peripheral wall 11B1 includes a square tube-shaped portion on the vehicle front side and a cylindrical portion on the vehicle rear side. An insertion hole into which a coupling member, such as a bolt or a clip, is inserted is formed in the bottom wall 11B2. The bottom wall 11B2 abuts on the second cross member 20b from the vehicle front side and is fixed to the second cross member 20b using the coupling member.

The outer connection portion 3 includes a front wall 3a extending in the vehicle width direction and oriented toward the vehicle front, and an upper wall 3b extending toward the vehicle rear side from the upper edge of the front wall 3a. In the illustrated example, the front wall 3a is generally a rectangle elongated in the width direction in plan view as viewed from the vehicle front. Each of the front wall 3a and the upper wall 3b is continuous with the lateral portion 22 and extends outward in the width direction. The upper wall 3b and a lower portion of the peripheral wall 11B1 are continuous with each other in the front-rear direction of the vehicle, and an upper surface of the upper wall 3b oriented toward the upper side of the vehicle (i.e., upper surface of outer connection portion 3) and an inner surface of the peripheral wall 11B1 (i.e., inner peripheral surface of second body fixing portion 11B) are continuous with each other in the front-rear direction of the vehicle.

According to such a configuration, by forming the second body fixing portion 11B in a recessed shape, it is possible to reduce the weight of the second body fixing portion 11B. Additionally, since the rigidity of the second body fixing portion 11B is improved, the support rigidity for the sensor device S is improved even more, and displacement of the sensor device S can be reduced even more reliably. Moreover, since the outer connection portion 3 is continuous with the second body fixing portion 11B, an external load and vibration are efficiently transmitted from the outer connection portion 3 to the body structure member 20 via the second body fixing portion 11B. In particular, since the outer connection portion 3 is continuous with the second body fixing portion 11B in the front-rear direction of the vehicle, an external load from the vehicle front is transmitted to the body structure member 20 more efficiently. As a result, displacement of the sensor device S can be reduced even more reliably.

In the present embodiment, the base portion 1 includes the depressed portion 14 adjacent to the second body fixing portion 11B and depressed toward the vehicle rear side (vehicle inner side). The depressed portion 14 includes, on the vehicle rear side, a bottom portion 14a oriented toward the vehicle front. As illustrated in Figure 4, the second body fixing portion 11B is recessed toward the vehicle rear side (vehicle inner side) from the bottom portion 14a of the depressed portion 14. According to such a configuration, since the amount of protrusion of the second body fixing portion 11B from the back surface (rear surface) of the base portion 1 toward the vehicle rear side is reduced by the depth of the depressed portion 14, it is possible to reduce the deformation of the second body fixing portion 11B and its periphery. Additionally, the operation of coupling the coupling member such as a bolt to the body structure member 20 from the vehicle front side through the insertion hole of the bottom wall 11B2 to support the sensor support member 10 by the body structure member 20 becomes easy.

In the illustrated example, as for the left second body fixing portion 11B, the depressed portion 14 is adjacent to the upper side and left upper half of the second body fixing portion 11B. As for the right second body fixing portion 11B, the depressed portion 14 is adjacent to the right side of the second body fixing portion 11B. Of the second body fixing portion 11B, the parts adjacent to the depressed portion 14 protrude less.

In the illustrated example, the first body fixing portion 11A and the second body fixing portion 11B are connected to each other via the depressed portion 14. Specifically, the base portion 1 is provided with an upper depressed portion 18 adjacent to the upper side of the depressed portion 14 and is depressed toward the vehicle rear side so as to be continuous with the bottom portion 14a of the depressed portion 14. The upper depressed portion 18 is connected to the first body fixing portion 11A (specifically, to outer body fixing portion 11A2). Thus, since the first body fixing portion 11A and the second body fixing portion 11B are connected by the highly rigid two depressed portions 14, 18, the rigidity of each of the first body fixing portion 11A and the second body fixing portion 11B is improved even more, and as a result, the support rigidity for the sensor device S is improved even more.

As illustrated in Figures 2 to 4, in the present embodiment, the outer connection portion 3 extends outward in the width direction beyond the second body fixing portion 11B in the width direction, and is connected to a lower edge portion 16 which is an edge portion of the base portion 1 on one side in the up-down direction. According to such a configuration, the rigidity of the outer connection portion 3 is improved, and an external load and vibration are more efficiently transmitted from the outer connection portion 3 to the second body fixing portion 11B. As a result, the support rigidity for the sensor device S is improved even more, and displacement of the sensor device S can be reduced even more reliably.

In the illustrated example, the base portion 1 includes a base lateral portion 17 including the widthwise outer end of the base portion 1 on the outside in the width direction of the second body fixing portion 11B. The outer connection portion 3 is connected to the lower edge portion 16 which is a lower edge portion of the base lateral portion 17. The outer connection portion 3 includes a horizontal portion 31 extending in the width direction so as to be continuous with the lateral portion 22 and having the upper wall 3b described earlier, and a vertical portion 32 extending upward from a widthwise outer end portion of the horizontal portion 31 (see Figure 2). The horizontal portion 31 extends outward in the width direction to a location exceeding the second body fixing portion 11B in the width direction, and an upper end portion of the vertical portion 32 is connected to the lower edge portion 16. The lower edge portion 16 is provided with a lower end wall (see Figure 4) extending along the lower edge of the base lateral portion 17 in the width direction and protruding toward the vehicle rear side from the back surface (rear surface) of the base lateral portion 17, whereby the rigidity of the lower edge portion 16 is improved. Accordingly, the connection with the lower edge portion 16 effectively improves the rigidity of the outer connection portion 3.

Additionally, in the illustrated example, the lower edge portion 16 is connected to the outer body fixing portion 11A2 of the first body fixing portion 11A by the base lateral portion 17. As a result, the rigidity of the outer connection portion 3 is improved even more, and consequently, displacement of the sensor device S can be reduced more reliably.

As illustrated in Figures 4 and 5, in the present embodiment, the outer connection portion 3 includes a part coupling portion 33 to which an in-vehicle part 40 is coupled. The in-vehicle part 40 is a part disposed around the sensor support member 10. In the illustrated example, the left and right outer connection portions 3 each have one part coupling portion 33. For example, the part coupling portion 33 includes an engagement claw protruding toward the vehicle rear side, and the in-vehicle part 40 includes an engagement hole 41a in a location corresponding to the engagement claw. By engaging the engagement claw with the engagement hole 41a of the in-vehicle part 40, the in-vehicle part 40 is coupled to the part coupling portion 33. According to such a configuration, since the rigidity of the outer connection portion 3 is improved by coupling the in-vehicle part 40 to the outer connection portion 3, the support rigidity for the sensor device S is improved even more, and displacement of the sensor device S can be reduced even more reliably. The support rigidity for the in-vehicle part 40 can also be improved. Furthermore, as illustrated in Figure 5, the left and right part coupling portions 33 (engagement claws) and the left and right outer sensor fixing portions 21B are arranged in a straight line in the vehicle width direction (see alternate long and short dash line in Figure 5). As a result, the support rigidity for the sensor device S is improved and displacement of the sensor device S is reduced even more reliably.

The in-vehicle part 40 is a part disposed at the vehicle rear (vehicle inner side) of the sensor support member 10, and preferably has high rigidity. In the illustrated example, the in-vehicle part 40 is an air guide member such as a shroud forming an air intake passage. The sensor support portion 2 and the lower edge portion 16 also include part coupling portions 25, 16a to which the in-vehicle part 40 is coupled, respectively, and the in-vehicle part 40 includes engagement holes 41b, 41c at locations corresponding to engagement claws of the part coupling portions 25, 16a (see Figure 4). Air having passed a plurality of vent holes of the exterior panel 30 as a grille is guided to a radiator (not illustrated) via the in-vehicle part 40 as an air guide member.

The air guide member (40) includes a rectangular frame portion 42 forming a ventilation space, and a partition 43 partitioning the inside of the frame portion 42. The partition 43 is disposed in an intermediate portion in the up-down direction of the frame portion 42, extends in the vehicle width direction, and both end portions of the partition 43 are fixed to the frame portion 42. By providing such a partition 43, the rigidity of the frame portion 42 is improved, and as a result, the support rigidity for the sensor device S is improved even more.

The part coupling portion 25 of the sensor support portion 2 is disposed adjacent to the upper sensor fixing portion 21A. In the illustrated example, the part coupling portion 25 is disposed adjacent to the left upper side of the upper sensor fixing portion 21A. As a result, the rigidity of the upper sensor fixing portion 21A and its periphery is improved and the support rigidity of the sensor support portion 2 for the sensor device S is improved even more. The part coupling portion 33 of the outer connection portion 3 is disposed on the widthwise inner side relative to a widthwise outer end portion of the outer connection portion 3, and in the illustrated example, is disposed at the widthwise central portion of the outer connection portion 3. Thus, since the part coupling portion 33 is disposed in a location closer to the outer sensor fixing portion 21B in the width direction, the support rigidity for the sensor device S is improved even more. Additionally, since the in-vehicle part 40 is coupled to the part coupling portion 16a of the lower edge portion 16 to which the outer connection portion 3 is connected, the rigidity of the outer connection portion 3 is improved, whereby the support rigidity for the sensor device S is improved even more. Moreover, since the in-vehicle part 40 is coupled not only to the outer connection portion 3, but also to the sensor support portion 2 and the lower edge portion 16, the rigidity of the in-vehicle part 40 is improved even more.

The base portion 1 is provided with a depressed portion 27 depressed toward the vehicle rear side in a location adjacent to the part coupling portion 25 and upper sensor fixing portion 21A arranged in the up-down direction. As a result, the rigidity of the upper sensor fixing portion 21A and its periphery is improved, and the support rigidity for the sensor device S is improved even more. A part of the air guide member (40) corresponding to the depressed portion 27 is provided with a recess 44 recessed toward the vehicle rear side (vehicle inner side) and receiving the depressed portion 27. The air guide member (40) is also provided with a recess 45 recessed toward the vehicle rear side and receiving the second body fixing portion 11B. The recess 45 is formed so as to fit along the peripheral wall 11B1 of the second body fixing portion 11B, whereby displacement of the air guide member (40) can be reduced. In the illustrated example, the recess 45a is disposed adjacent to a lower surface and side surface of the left second body fixing portion 11B. Instead, the recess 45a may be disposed adjacent to only one of the lower surface and side surface. Alternatively, the recess 45a may be depressed upward so as to be disposed adjacent to an upper surface of the left second body fixing portion 11B.

The air guide member (40) is also provided with a recess 45b corresponding to the right second body fixing portion 11B. The recess 45b is formed in a cutout shape receiving the right second body fixing portion 11B, and reduces displacement of the air guide member (40). Of the air guide member (40), a portion sandwiched by the two recesses 45a, 45b in the vehicle width direction is restricted from moving in the vehicle width direction and up-down direction by the left and right second body fixing portions 11B. Accordingly, displacement of the air guide member (40), i.e., displacement of the periphery of the engagement hole 41b and the engagement claw 25a of the sandwiched portion can be reduced. A plurality of depressions 111 (see Figure 5) depressed toward the vehicle rear side (vehicle inner side) is provided around the right second body fixing portion 11B as a structure for improving the rigidity around the right second body fixing portion 11B. In the illustrated example, in plan view as viewed from the vehicle rear, the second body fixing portion 11B is rectangular, three depressions 111 are disposed on imaginary extension lines of diagonals of the second body fixing portion 11B and are arranged in a staggered pattern with respect to the second body fixing portion 11B. As a result, the surface rigidity on the base end side of the right second body fixing portion 11B, in particular, is improved.

Note that the part coupling portions 16a, 25, 33 may include engagement holes instead of the engagement claws 16a1, 25a, 33a, and the in-vehicle part 40 may include engagement claws instead of the engagement holes 41a, 41b, 41c. The method of coupling the in-vehicle part 40 such as an air guide member to the sensor support member 10 is not limited to engagement of an engagement claw and engagement hole, and may be another method. For example, the coupling method may be fastening by fastening members such as bolts or clips, or by welding. In this case, the connection rigidity between the sensor support member 10 and the in-vehicle part 40 is improved.

In the present embodiment, the upper sensor fixing portion 21A and the outer sensor fixing portion 21B are disposed in locations offset from each other in the up-down direction. In the illustrated example, the upper sensor fixing portion 21A is disposed at the middle in the width direction of the upper portion 23 of the sensor support portion 2, and the outer sensor fixing portion 21B is disposed at the middle in the up-down direction of the lateral portion 22. The outer connection portion 3 extends outward in the width direction from a part of the lateral portion 22 between the upper sensor fixing portion 21A and the outer sensor fixing portion 21B in the up-down direction.

According to such a configuration, the rigidity of the periphery of each of the upper sensor fixing portion 21A and the outer sensor fixing portion 21B, whereby the support rigidity of the sensor fixing portions 21A, 21B for the sensor device S is improved. Accordingly, displacement of the sensor device S can be reduced even more reliably.

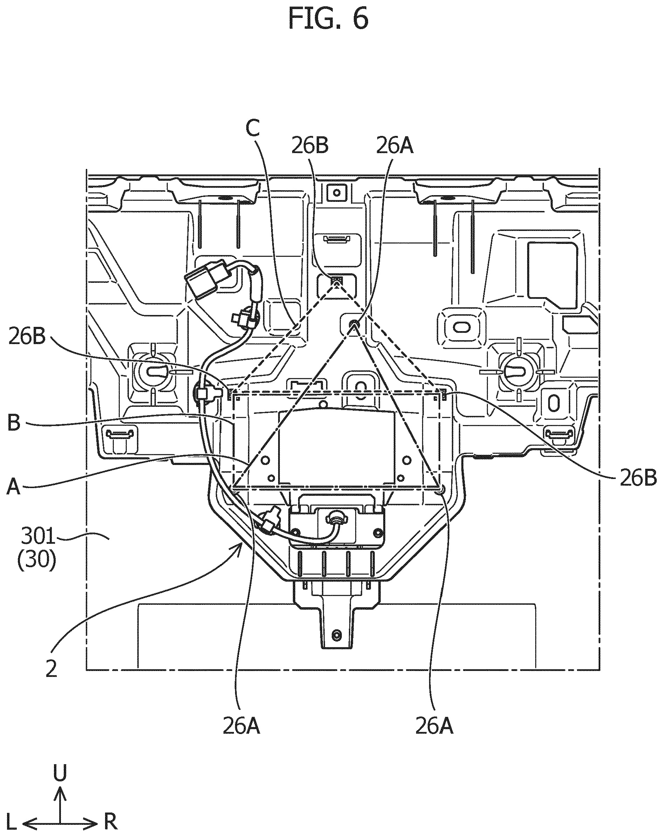

As illustrated in Figure 6, in the present embodiment, the sensor support portion 2 includes one or more panel coupling portions 26A overlapped with, and coupled to, the exterior panel 30, and one or more panel positioning portions 26B positioned with respect to the exterior panel 30. Figure 6 is a rear view of the sensor support member 10 coupled to the exterior panel 30 from the vehicle rear side as viewed from the vehicle rear side. In the illustrated example, three panel coupling portions 26A and three panel positioning portions 26B are provided.

The panel coupling portions 26A and panel positioning portions 26B are provided in locations corresponding to the periphery of the detection wave passage portion 30a so as to surround the detection wave passage portion 30a. As a result, the detection wave passage portion 30a is effectively supported by the sensor support member 10, and displacement of the detection wave passage portion 30a due to an external load, vibration, or the like is reduced. Each panel coupling portion 26A is coupled to the exterior panel 30 by using a coupling member such as a bolt or a clip, or by engagement of an engagement hole and an engagement claw, for example. Each panel positioning portion 26B is positioned with respect to the exterior panel 30 by a combination of a positioning projection and a positioning hole, for example.

In plan view as viewed in the front-rear direction of the vehicle, imaginary line A connecting the three panel coupling portions 26A forms an imaginary triangle. In plan view, the central portion of the imaginary triangle is generally located at the central portion of the detection wave passage portion 30a. According to such an arrangement, the support rigidity of the sensor support member 10 for the detection wave passage portion 30a can be improved, and displacement of the detection wave passage portion 30a can be reduced even more reliably.

As illustrated in Figure 1, when the exterior panel 30 includes the first exterior panel 301 and the second exterior panel 302 supporting the first exterior panel 301 from the vehicle rear side (vehicle inner side), each panel coupling portion 26A may be superimposed with both the first exterior panel 301 and the second exterior panel 302, and each panel positioning portion 26B may be positioned with respect to both the first exterior panel 301 and the second exterior panel 302. According to such a configuration, the rigidity of the periphery of each panel coupling portion 26A and each panel positioning portion 26B is improved, and as a result, displacement of the detection wave passage portion 30a can be reduced even more reliably.

The first exterior panel 301 includes the detection wave passage portion 30a, and the second exterior panel 302 has a sensor opening 30b (see Figure 1) through which detection waves pass in a part corresponding to the detection wave passage portion 30a. For example, the second exterior panel 302 is a grille panel including a plurality of vent holes penetrating in the front-rear direction of the vehicle, and the sensor opening 30b is located at the vehicle front of the sensor device S. The first exterior panel 301 is a sensor cover covering the sensor device S from the vehicle front side, and is a decorative panel, for example.

In plan view as viewed in the front-rear direction of the vehicle (inside-outside direction of vehicle), two panel coupling portions 26A and two panel positioning portions 26B are disposed in locations corresponding to the vicinity of four corners of the quadrilateral (inverted trapezoid in illustrated example) detection wave passage portion 30a.
Accordingly, imaginary line B connecting the two panel coupling portions 26A and the two panel positioning portions 26B forms an imaginary quadrilateral (an imaginary rectangle in the illustrated example). According to such an arrangement, displacement of the detection wave passage portion 30a can be reduced even more reliably. Additionally, in plan view, the three panel positioning portions 26B are disposed at the three vertices of imaginary triangle C protruding upward. The lower two panel positioning portions 26B are disposed at locations corresponding to the vicinity of the upper two corners of the quadrilateral detection wave passage portion 30a.

While the embodiment of the present invention has been described above, the present invention is not limited to the above embodiment, and further modifications and changes can be made based on the technical concept of the present invention.

For example, in the present embodiment described above, the sensor support member 10 includes the outer connection portions 3 on both sides of the sensor support portion 2 in the width direction, but the sensor support member 10 may include the outer connection portion 3 on only one side of the sensor support portion 2 in the width direction. That is, the sensor support member 10 may include only one of the left outer connection portion 3 and the right outer connection portion 3. In this case, too, the first body fixing portion 11A and the second body fixing portion 11B are preferably provided on each outer side of the sensor support portion 2 in the width direction.

In the above embodiment, the sensor support portion 2 is disposed on the lower side of the base portion 1, but the invention is not limited thereto, and the sensor support portion 2 may be disposed on the upper side of the base portion 1. In this case, "one side in the up-down direction" according to the present invention is the upper side, and "another side in the up-down direction" according to the present invention is the lower side. The base portion 1 may be configured such that the first body fixing portion 11A is fixed to the third cross member 20c, for example.

In the above embodiment, the sensor support member 10 is covered with the exterior panel 30 from the vehicle outer side. Alternatively, at least a part of the sensor support member 10 may be exposed to the exterior of the vehicle so that at least a part of the sensor support member 10 forms a design surface of the vehicle exterior.

In the above embodiment, the sensor support member 10 is disposed in the vehicle widthwise central portion oriented toward the vehicle front in the front portion of the vehicle. Alternatively, the sensor support member 10 may be disposed at a front lateral portion oriented toward the obliquely front side. That is, in the above embodiment, the front portion of the vehicle includes not only the vehicle widthwise central portion oriented toward the vehicle front, but also a front lateral portion oriented toward the obliquely front side.

**In** the above embodiment, the sensor support member 10 is disposed at the front portion of the vehicle, but the invention is not limited thereto, and the sensor support member 10 may be disposed at a rear portion or lateral portion of the vehicle. When the sensor support member 10 is disposed at a rear portion of the vehicle, "inside-outside direction of the vehicle" according to the present invention is the front-rear direction of the vehicle, and "vehicle outer side" according to the present invention is the vehicle rear side, and "vehicle inner side" according to the present invention is the vehicle front side. When the sensor support member 10 is disposed at a lateral portion of the vehicle such that the sensor surface of the sensor device S faces the outer side in the vehicle width direction, "inside-outside direction of the vehicle" according to the present invention is the vehicle width direction, "vehicle outer side" according to the present invention is the left or right of the vehicle, "vehicle inner side" according to the present invention is the right or left of the vehicle, and "width direction" according to the present invention is the front-rear direction of the vehicle.

### [Reference Signs List]

- 1: Base portion
- 11A: First body fixing portion (body fixing portion)
- 11A1: Inner body fixing portion
- 11A2: Outer body fixing portion
- 11B: Second body fixing portion (another body fixing portion)
- 11B1: Peripheral wall
- 11B2: Bottom wall
- 12A: Up-down direction connection portion
- 12B: Width direction connection portion
- 13: Neighboring portion
- 14: Depressed portion
- 14a: Bottom portion
- 15: Bulging portion
- 16: Lower edge portion (edge portion)
- 16a: Part coupling portion
- 16a1: Engagement claw
- 17: Base lateral portion
- 18: Upper depressed portion
- 19: Raised portion
- 2: Sensor support portion
- 21A: Upper sensor fixing portion (sensor fixing portion)
- 21B: Outer sensor fixing portion (another sensor fixing portion)
- 21C: Sensor positioning portion
- 22: Lateral portion
- 23: Upper portion
- 24: Lower portion
- 25: Part coupling portion
- 25a: Engagement claw
- 26A: Panel coupling portion
- 26B: Panel positioning portion
- 27: Depressed portion
- 28: Connection wall
- 29: Reinforcement rib
- 3: Outer connection portion
- 3a: Front wall
- 3b: Upper wall
- 31: Horizontal portion
- 32: Vertical portion
- 33: Part coupling portion
- 33a: Engagement claw
- 10: Sensor support member
- 20: Body structure member
- 20a: First cross member
- 20b: Second cross member
- 20c: Third cross member
- 20d: Column member
- 20e: Side member
- 30: Exterior panel
- 30a: Detection wave passage portion
- 30b: Sensor opening
- 301: First exterior panel
- 302: Second exterior panel
- 40: In-vehicle part
- 41a, 41b, 41c: Engagement hole
- 42: Frame portion
- 43: Partition
- 44, 45a, 45b: Recess
- A, B: Imaginary line
- C: Imaginary triangle
- S: Sensor device
- Sa: Sensor main body
- Sb: Sensor bracket
- V: Vent hole

## Claims

1. A sensor support member comprising
a base portion disposed on a vehicle outer side of a body structure member of a vehicle and extending in an up-down direction, and
a sensor support portion disposed on one side in the up-down direction and on the vehicle outer side of the base portion, and supporting a sensor device that senses an external environment of the vehicle, the sensor support member **characterized in that**:
the sensor support portion includes a sensor fixing portion disposed on another side in the up-down direction in the sensor support portion and to which the sensor device is fixed;
the base portion includes a body fixing portion disposed on the other side in the base portion and fixed to the body structure member, and an up-down direction connection portion extending in the up-down direction toward the other side so as to be continuous with the sensor support portion; and
the up-down direction connection portion is connected to the sensor fixing portion and bulges toward the vehicle outer side.

2. The sensor support member according to claim 1, wherein
the sensor support portion includes another sensor fixing portion disposed in a lateral portion in a width direction orthogonal to the up-down direction of the sensor support portion and to which the sensor device is fixed, and
an end portion of the up-down direction connection portion on the one side extends in the width direction so as to overlap the lateral portion in the width direction.

3. The sensor support member according to claim 1 or 2, wherein
the body fixing portion is provided on each outer side of the up-down direction connection portion in a width direction orthogonal to the up-down direction, and
the base portion includes a width direction connection portion connecting the up-down direction connection portion and the body fixing portion on each outer side.

4. The sensor support member according to claim 3, wherein
the body fixing portion includes an inner body fixing portion and an outer body fixing portion arranged in the width direction, and the inner body fixing portion is disposed between the up-down direction connection portion and the outer body fixing portion in the width direction, and
the width direction connection portion extends in the width direction and connects the up-down direction connection portion to both the inner body fixing portion and the outer body fixing portion.

5. The sensor support member according to claim 4, wherein
the base portion includes another body fixing portion disposed on the outside of the sensor support portion in the width direction and on the one side of the body fixing portion in the up-down direction, and fixed to the body structure member, and
the other body fixing portion is disposed between the inner body fixing portion and the outer body fixing portion in the width direction.

6. The sensor support member according to claim 4 or 5, wherein the base portion includes a neighboring portion adjacent to the outside in the width direction of the up-down direction connection portion and extending in the up-down direction so as to be continuous with the sensor support portion, and a bulging portion adjacent to the outside in the width direction of the neighboring portion, bulging toward the vehicle outer side from the neighboring portion, and connecting the neighboring portion and the outer body fixing portion.

7. The sensor support member according to claim 6, wherein the bulging portion extends in the width direction so as to straddle the inner body fixing portion and the outer body fixing portion in the width direction.
